# EUROPEAN PATENT APPLICATION

(11) **EP 3 995 667 A1**
(43) Date of publication of application: **11.05.2022**
(21) Application number: 20206071.1
(22) Date of filing: 06.11.2020
(51) Int. Cl.: E21B 41/00, E21B 43/01, E21B 43/16, E21B 43/40

(54) **SUBSEA FLUID HANDLING SYSTEM AND METHOD FOR LONG TERM STORAGE OF FLUIDS IN A SUBTERRANEAN VOID**

(71) Applicant: Horisont Energi AS, 4313 Sandnes (NO)
(72) Inventor: HAUKELIDSÆTER EIDSEN, Bjørgulf, 4018 Stavanger (NO)
(74) Representative: Brann AB

(57) **Abstract**

A fluid, for example containing carbon dioxide in the liquid phase, is injected into a subterranean void (150) for long term storage at an offshore injection site (100). The offshore injection site receives the fluid from a vessel (110), e.g. via a buoy-based off-loading unit (170). The fluid is fed from the vessel (110) to a subsea template (120) on a seabed (130) at a wellhead for a drill hole (140) to the subterranean void (150). The subsea template (140) contains a utility system adapted to cause the fluid from the vessel (110) to be injected into the subterranean void (150) in response to control commands (C_{cmd}), which may originate from a an onshore location, or another site located geographically separated from the offshore injection site (100).

## Description

### TECHNICAL FIELD

The present invention relates generally to strategies for reducing the amount of environmentally unfriendly gaseous components in the atmosphere. Especially, the invention relates to a subsea fluid handling system for long term storage of fluids and a method for such storage in a subterranean void.

### BACKGROUND

Carbon dioxide is an important heat-trapping gas, a so-called greenhouse gas, which is released through certain human activities such as deforestation and burning fossil fuels. However, also natural processes, such as respiration and volcanic eruptions generate carbon dioxide.

Today's rapidly increasing concentration of carbon dioxide, CO₂, in the Earth's atmosphere is problem that cannot be ignored. Over the last 20 years, the average concentration of carbon dioxide in the atmosphere has increased by 11 percent; and since the beginning of the Industrial Age, the increase is 47 percent. This is more than what had happened naturally over a 20000 year period - from the Last Glacial Maximum to 1850.

Various technologies exist to reduce the amount of carbon dioxide produced by human activities, such as renewable energy production. There are also technical solutions for capturing carbon dioxide from the atmosphere and storing it on a long term/permanent basis in subterranean reservoirs.

For practical reasons, most of these reservoirs are located under mainland areas, for example in the U.S.A and in Algeria, where the In Salah CCS (carbon dioxide capture and storage system) was located. However, there are also a few examples of offshore injection sites, represented by the Sleipner and Snøhvit sites in the North Sea. At the Sleipner site, CO₂ is injected from a bottom fixed platform. At the Snøhvit site, CO₂ from LNG (Liquefied natural gas) production is transported through a 153 km long 8 inch pipeline on the seabed and is injected from a subsea template into the subsurface below a water bearing reservoir zone as described inter alia in Shi, J-Q, et al., "Snøhvit CO2 storage project: Assessment of CO2 injection performance through history matching of the injection well pressure over a 32-months period", Energy Procedia 37 (2013) 3267 - 3274. The article, Eiken, O., et al., "Lessons Learned from 14 years of CCS Operations: Sleipner, In Salah and Snøhvit", Energy Procedia 4 (2011) 5541-5548 gives an overview of the experience gained from three CO₂ injection sites: Sleipner (14 years of injection), In Salah (6 years of injection) and Snøhvit (2 years of injection).

The Snøhvit site is characterized by having the utilities for the subsea CO₂ wells and template onshore. This means that for example the chemicals, the hydraulic fluid, the power source and all the controls and safety systems are located remote from the place where CO₂ is injected. This may be convenient in many ways. However, the utilities and power must be transported to the seabed location via long pipelines and high voltage power cables respectively. The communications for the control and safety systems are provided through a fiber-optic cable. The CO₂ gas is pressurized onshore and transported through a pipeline directly to a well head in a subsea template on the seabed, and then fed further down the well into the reservoir. This renders the system design highly inflexible because it is very costly to relocate the injection point should the original site fail for some reason. In fact, this is what happened at the Snøhvit site, where there was an unexpected pressure build up, and a new well had to be established.

As an alternative to the remote-control implemented in the Snøhvit project, the prior art teaches that CO₂ may be transported to an injection site via surface ships in the form of so-called type C vessels, which are semi refrigerated vessels. Type C vessels may also be used to transport liquid petroleum gas, ammonia, and other products.

In a type C vessel, the pressure varies from 5 to 18 Barg. Due to constraints in tank design, the tank volumes are generally smaller for the higher pressure levels. The tanks used have a cold temperature as low as -55 degrees Celsius. The smaller quantities of CO₂ typically being transported today are held at 15 to 18 Barg and -22 to -28 degrees Celsius. Larger volumes of CO₂ may be transported by ship under the conditions: 6 to 7 Barg and -50 degrees Celsius, which enables use of the largest type C vessels. See e.g. Haugen, H. A., et al., "13th International Conference on Greenhouse Gas Control Technologies, GHGT-13, 14-18 - November 2016, Lausanne, Switzerland Commercial capture and transport of CO2 from production of ammonia", Energy Procedia 114 (2017) 6133 - 6140.

In the existing implementations, it is generally understood that a stand-alone offshore injection site requires a floating installation or a bottom fixed marine installation. Such installations provide utilities, power and control systems directly to the wellhead platforms or subsea wellhead installations. It is not unusual, however, that power is provided from shore via high-voltage AC cables.

The prior art displays offshore floaters in the form of a floating production and storage unit (FPSO), a floating liquefied natural gas (FLNG) plant, a Spar floater tethered to the seabed, a semi-submersible structure (a buoyant platform with ballast tanks) tied to the seabed, a tension leg platform and different kinds of jacket structures. All these designs are generally associated with high capital and operational costs.

NO 320 013 B1 teaches that one and the same vessel may both transport extracted gas from a well and transport CO₂ gas to be injected into a subterranean reservoir. Here, the vessel carries all the utilities, the well/barrier control, the power supply and the control room for operating the well. As a result, the vessel and must operate under offshore legislation and regulations as a "shuttle producer". It also means that the well's riser system becomes relatively complex because all the utilities, e.g. hydraulics, chemicals and power, must be supplied from the vessel to the subsea facilities through the riser system. Moreover, for continuous gas production and CO₂ injection, at least two such shuttle vessels are required. This, in turn, is equivalent to a large number of connect and disconnect operations. Consequently, this approach becomes very costly.

WO 2018/234721 shows a system where CO₂ is delivered in the liquid or super-critical state by at least one carrier vessel from at least one storage site, e.g. an onshore site, to an integrated offshore facility. The integrated offshore facility is provided with at least one on-site storage tank or vessel adapted to store CO₂ in the liquid or supercritical state and with equipment for marine transfer of CO₂ in the liquid or supercritical state. Here, the CO₂ is used for enhanced oil recovery (EOR) or enhanced gas recovery (EGR) at the offshore site by injection into a sub-sea oil or natural gas bearing reservoir and recovery of oil and/or natural gas from a resulting production stream. Thus, the document teaches that offshore installations may be applicable to a stand-alone offshore field development. However, storing CO₂ in the supercritical state is very impractical and expensive because it requires a pressure of about 79 Barg. Further, the temperature is above 39 degrees Celsius; and since the environment cools the storage, continuous heating is required. In addition, the high pressure is no advantage because CO₂ is already in liquid state just above 45 degrees Celsius. Storing and handling the CO₂ in the supercritical state is therefore complex and expensive, especially on the floating unit as proposed in this document.

In summary, WO 2018/234721 presents a solution for vessel-transported CO₂ to be injected and expanded in existing stand-alone offshore field developments.

Thus, different solutions are known for injecting environmentally unfriendly fluids like carbon dioxide into subterranean reservoirs. However, each of these solutions is associated with one or more complications or challenges in terms of technology, costs and/or regulatory compliance.

### SUMMARY

The object of the present invention is therefore to offer a solution that mitigates the above problems and offers cost-efficient and comparatively flexible storage of harmful fluids, such as carbon dioxide.

According to one aspect of the invention, the object is achieved by a subsea fluid handling system for long term storage of fluids, which system includes an offshore injection site configured to receive fluid from a vessel. The offshore injection site, in turn, contains a subsea template arranged on a seabed at a wellhead for a drill hole to a subterranean void, for instance represented by a subterranean aquifer, a depleted gas reservoir, a depleted oil reservoir or a combination thereof. The subsea template has a utility system configured to cause the fluid from the vessel to be injected into the subterranean void in response to control commands.

This fluid subsea handling system is advantageous because it does not require any fixed pipeline installations. At the same time, it enables using transport vessels having a relatively low level of onboard functionality. Consequently, the flexibility-to-cost ratio can be kept high.

Further, the proposed stand-alone injection site does not need any permanent floating or bottom fixed installations. This means that significant capital costs are avoided in relation to the known solutions.

According to one embodiment of this aspect of the invention, the system includes a control site configured to generate the control commands. The control site is positioned at a location being geographically separated from the offshore injection site, for example at an onshore location or at another offshore location. The subsea template further comprises a communication interface communicatively connected to the control site; and the sub-sea template is configured to receive the control commands via the communication interface. Thereby, the offshore injection site may be remote controlled from a wide variety of potential control sites. In particular, one control site may control two or more offshore injection sites. Naturally, this is also beneficial from a cost and flexibility point-of-view.

Moreover, the proposed remote control of the offshore injection site is advantageous with respect to the overall life cycle management of the system. Namely, it is typically required that a CO₂ injection site be monitored during a prescribed period after that the bore hole has been sealed, say 20 years, for instance to assess the development of pressures and capillary trapping. The communication channel used for forwarding the control commands when operating the offshore injection site may, of course, be reused for such monitoring purposes. Thus, substantial cost savings can be made.

According to another embodiment of this aspect of the invention, the communication interface is configured to receive the control commands via a submerged fiber-optic cable, a submerged copper cable, a terrestrial radio link and/or a satellite link. This further enhances the flexibility and allows for redundancy in terms of how to control the offshore injection site.

According to yet another embodiment of this aspect of the invention, the offshore injection site contains a buoy-based off-loading unit configured to be connected to the vessel and receive the fluid therefrom via a swivel assembly in the vessel. Thus, the fluid offloading may be effected in a convenient and straightforward manner with a minimum amount of measures required by personnel on the vessel.

Preferably, the buoy-based off-loading unit is connected to the subsea template via at least one injection riser. The at least one injection riser is configured to forward the fluid from the buoy-based off-loading unit to the subsea template. It is further advantageous if the at least one injection riser has at least one hold-back clamp securing it to the seabed. Namely, the underwater conditions may be harsh, and with no local surveillance by personnel stationed at the offshore injection site it is key that the equipment remains in position.

According to still another embodiment of this aspect of the invention, the subsea template includes a power input interface configured to receive electric energy for operating the utility system. Hence, the subsea template may be powered by one or more local power sources as well as from various kinds of remote power sources. Naturally, this vouches both for reliability and flexibility.

For example, the power input interface may be configured to receive the electric energy for use in connection with operating a well at the wellhead, a safety barrier element comprised in the subsea template and/or a remotely operated vehicle, e.g. a so-called ROV (remote operated vehicle), stationed at the subsea template.

According to further embodiments of this aspect of the invention, at least one power source is configured to supply the electric power to the power input interface, which at least one power source is positioned at the offshore injection site, at an offshore site geographically separated from the offshore injection site and/or at an onshore site.

According to another embodiment of this aspect of the invention, the utility system in the subsea template contains a valve system to control the injection of the fluid into the subterranean void. Depending on whether the valve system is hydraulically or electrically operated, the utility system either contains a hydraulic power unit configured to supply pressurized hydraulic fluid for operation of the valve system, or an electrical wiring system for operation of the valve system. In any case, the subsea template further contains at least one battery configured to store electric energy for use by the valve system the hydraulic power unit or the electrical wiring system as a backup to the electric energy received directly via the power input interface. As a result, the valve system may be operated also if there is a temporary outage in the electric power supply to the offshore injection site.

According to still another embodiment of this aspect of the invention, the utility system in the subsea template further contains at least one storage tank holding at least one assisting liquid, which is configured to facilitate at least one function associated with injecting the fluid into the subterranean void. The at least one assisting liquid may thus contain a de-hydrating liquid and/or an anti-freezing liquid. In particular, as will be explained in the detailed description, it is generally advantageous to inject MEG (mono ethylene glycol) into the well in an early phase of an injection session. A MEG injection system may in turn contain a storage tank, an accumulator tank an at least one chemical pump.

It is further beneficial if the offshore injection site is configured to receive the fluid in a liquid phase because this facilitates the logistics and the overall handling of the fluid, especially if it contains CO₂.

According to another aspect of the invention, the object is achieved by a method for long term storage of fluid in a subterranean void. The method involves connecting a vessel to an offshore injection site. The vessel contains a fluid to be stored in the subterranean void and it is presumed that the offshore injection site includes a subsea template arranged on a seabed at a wellhead for a drill hole to the subterranean void as well as a utility system. The method further involves receiving control commands in the offshore injection site; and controlling the utility system in the subsea template to cause the fluid in the vessel to be injected into the subterranean void in response to said control commands, which may originate from a control site positioned at a location geographically separated from the offshore injection site.

This method is advantageous because it relieves the vessel both from having onboard utility functionality and from being responsible for controlling the fluid injection. Moreover, the vessel does not need to operate under the offshore legislation or regulations that apply to "shuttle producers."

Preferably, the subsea template contains a communication interface communicatively connected to the control site, and the method involves receiving the control commands in the subsea template via the communication interface.

According to one embodiment of this aspect of the invention, prior to controlling the utility system to cause the fluid from the vessel to be injected into the subterranean void, the method involves injecting at least one heated chemical from the vessel. The at least one heated chemical is adapted to remove at least one undesired constituent from the subterranean void and/or reduce an amount of undesired chemical reactions between the fluid and formation water surrounding the offshore injection site. The at least one heated chemical may also be adapted to melt any CO₂ hydrates. To this aim, the at least one heated chemical may contain MEG, di ethylene glycol (DEG) and/or tri ethylene glycol (TEG). It is true that this places a moderate degree of utility functionality on the vessel. However, for logistic reasons, supplying said chemicals from the vessel is typically preferable over a design where these chemicals are locally stored in the subsea template.

Further advantages, beneficial features and applications of the present invention will be apparent from the following description and the dependent claims.

### BRIEF DESCRIPTION OF THE DRAWINGS

The invention is now to be explained more closely by means of preferred embodiments, which are disclosed as examples, and with reference to the attached drawings.
- Figure 1: schematically illustrates a system for long term storage of fluids in a subterranean void according to one embodiment of the invention; and
- Figure 2: illustrates, by means of a flow diagram, one embodiment of the method according to the invention.

### DETAILED DESCRIPTION

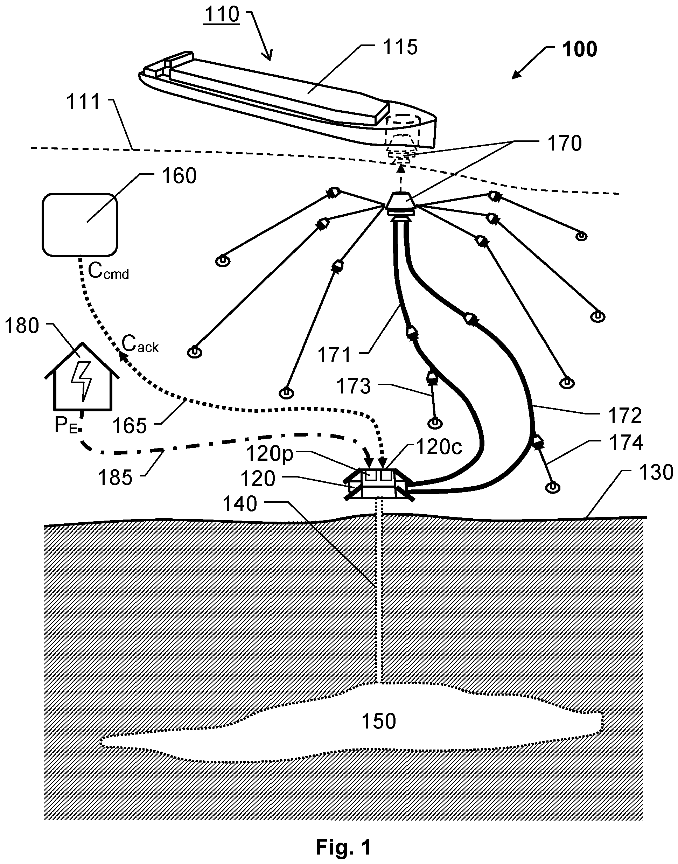

In Figure 1, we see a schematic illustration of a system according to one embodiment of the invention for long term storage of fluids, e.g. carbon dioxide, in a subterranean void or accommodation space 150, which typically is a subterranean aquifer. However, according to the invention, the subterranean void 150 may equally well be a reservoir containing gas and/or oil, a depleted gas and/or oil reservoir, a carbon dioxide storage/disposal reservoir, or a combination thereof. These subterranean accommodation spaces are typically located in porous or fractured rock formations, which for example may be sandstones, carbonates, or fractured shales, igneous or metamorphic rocks.

The system includes at least one offshore injection site 100, which is configured to receive fluid, e.g. in a liquid phase, from at least one fluid tank 115 of a vessel 110. The offshore injection site 100, in turn, contains a subsea template 120 arranged on a seabed/sea bottom 130. The subsea template 120 is located at a wellhead for a drill hole 140 to the subterranean void 150. The subsea template 140 also contains a utility system configured to cause the fluid from the vessel 110 to be injected into the subterranean void 150 in response to control commands C_{cmd}. In other words, the utility system is not located onshore, which is advantageous for logistic reasons. For example therefore, in contrast to the above-mentioned Snøhvit site, there is no need for any umbilicals or similar kinds of conduits to provide supplies to the utility system.

According to one embodiment of the invention, the utility system in the subsea template 120 contains at least one storage tank. The at least one storage tank holds at least one assisting liquid, which is configured to facilitate at least one function associated with injecting the fluid into the subterranean void 150. The at least one assisting liquid contains a de-hydrating liquid and/or an anti-freezing liquid.

In particular, the at least one storage tank may hold MEG. The MEG may further be heated in the vessel 110, and be injected into the subterranean void 150 prior to injecting the fluid, for instance in the form of CO₂ in the liquid phase. Namely, the injection, e.g. of CO₂, vaporizes formation water which typically surrounds the subsea template 120 and its wellhead into the dry CO₂, especially near the injection wellbore. This increases formation water salinity locally, leading to supersaturation and subsequent salt precipitation. The process is aggravated by capillary and, in some cases, gravity backflow of brine into the dried zone. The accumulated precipitated salt reduces permeability around the injection well, and may cause unacceptably high injection pressures, and consequently reduced injection. The effect depends on formation water salinity and composition, and formation permeability. A MEG injection system of the subsea template 120 preferably contains a storage tank, an accumulator tank an at least one chemical pump.

The above is an issue particularly for an early injection period, before establishing a significant CO₂ plume around the injection well, when formation water backflow during injection stops (it) is more likely to occur.

In Figure 1, a control site, generically identified as 160, is adapted to generate the control commands C_{cmd} for controlling the flow of fluid from the vessel 110 and down into the subterranean void 150. The control site 160 is positioned at a location geographically separated from the offshore injection site 100, for example in a control room onshore. However, additionally or alternatively, the control site 160 may be positioned at an offshore location geographically separated from the offshore injection site, for example at another offshore injection site. Consequently, a single control site 160 can control multiple offshore injection sites 100. There is also large room for varying which control site 160 controls which offshore injection site 100. Communications and controls are thus located remote from the offshore injection site 100. However, as will be discussed below, the offshore injection site 100 may be powered locally, remotely or both.

In order to enable remote control from the control site 160, the subsea template 120 contains a communication interface 120c that is communicatively connected to the control site 160. The subsea template 120 is also configured to receive the control commands C_{cmd} via the communication interface 120c.

Depending on the channel(s) used for forwarding the control commands C_{cmd} between the control site 160 and the offshore injection site 100, the communication interface 120c may be configured to receive the control commands C_{cmd} via a submerged fiber-optic and/or copper cable 165, a terrestrial radio link (not shown) and/or a satellite link (not shown). In the latter two cases, the communication interface 120c includes at least one antenna arranged above the water surface 111.

Preferably, the communicative connection between the control site 160 and the subsea template 120 is bi-directional, so that for example acknowledge messages C_{ack} may be returned to the control site 160 from the subsea template 120.

According to one embodiment of the invention, the offshore injection site 100 includes a buoy-based off-loading unit 170, for instance of submerged turret loading (STL) type. When inactive, the buoy-based off-loading unit 170 may be submerged to 30 - 50 meters depth, and when the vessel 110 approaches the offshore injection site 100 to offload fluid, the buoy-based off-loading unit 170 and at least one injection riser 171 and 172 connected thereto are elevated to the water surface 111. After that the vessel 110 has been positioned over the buoy-based off-loading unit 170, this unit is configured to be connected to the vessel 110 and receive the fluid from the vessel's fluid tank(s) 115, for example via a swivel assembly in the vessel 110.

Each of the at least one injection riser 171 and 172 respectively is configured to forward the fluid from the buoy-based off-loading unit 170 to the subsea template 120, which, in turn, is configured to pass the fluid on via the wellhead and the drill hole 140 down to the subterranean void 150. To keep the at least one injection riser 171 and 172 in place between the buoy-based off-loading unit 170 and the subsea template 120, the at least one injection riser 171 and 172 preferably has at least one hold-back clamp 173 and 174 respectively, which secures the at least one injection riser 171 and 172 to the seabed 130.

According to one embodiment of the invention, the subsea template 120 contains a power input interface 120p, which is configured to receive electric energy P_{E} for operating the utility system. The power input interface 120p may be configured to receive the electric energy P_{E} to be used in connection with operating a well at the wellhead, a safety barrier element of the subsea template 120 and/or a remotely operated vehicle, e.g. a ROV, stationed on the seabed 130 at the subsea template 120.

Figure 1 illustrates a generic power source 180, which is configured to supply the electric power P_{E} to the power input interface 120p. It is generally advantageous if the electric power P_{E} is supplied via a cable 185 from the power source 180 in the form of low-power direct current (DC) in the range of 200V - 1000V, preferably around 400V. The power source 180 may either be co-located with the offshore injection site 100, for instance as a wind turbine, a solar panel and/or a wave energy converter; and/or be positioned at an onshore site and/or at another offshore site geographically separated from the offshore injection site 100. Thus, there is a good potential for flexibility and redundancy with respect to the energy supply for the offshore injection site 100.

The subsea template 120 contains a valve system that is configured to control the injection of the fluid into the subterranean void 150. The valve system, as such, may be operated by hydraulic means, electric means or a combination thereof. The sub-sea template 120 preferably also includes at least one battery configured to store electric energy for use by the valve system as a backup to the electric energy P_{E} received directly via the power input interface 120p. More precisely, if the valve system is hydraulically operated, the subsea template 120 contains a hydraulic pressure unit (HPU) configured to supply pressurized hydraulic fluid for operation of the valve system. For example, the HPU may supply the pressurized hydraulic fluid through a hydraulic small-bore piping system. The at least one battery is here configured to store electric backup energy for use by the hydraulic power unit and the valve system.

Alternatively, or additionally, the valve operations may also be operated using an electrical wiring system and electrically controlled valve actuators. In such a case, the subsea template 120 contains an electrical wiring system configured to operate the valve system by means of electrical control signals. Here, the at least one battery is configured to store electric backup energy for use by the electrical wiring system and the valve system.

Consequently, the valve system may be operated also if there is a temporary outage in the electric power supply to the offshore injection site. This, in turn, increases the overall reliability of the system.

Locating the utility system at the seabed template 120 in combination with the proposed remote control from the control site 160 avoids the need for offshore floating installations as well as permanent offshore marine installations. The invention allows direct injection from relatively uncomplicated maritime vessels 110. These factors render the system according to the invention very cost efficient.

According to the invention, further cost savings can be made by avoiding the complex offshore legislation and regulations. Namely, a permanent offshore installation acting as a field center for an offshore field development is bound by offshore legislation and regulations. There are strict safety requirements related to well control especially. For instance, offshore Norway, it is stipulated that floating offshore installations, permanent or temporary, that control well barriers must satisfy the dynamic positioning level 3 (DP3) requirement. This involves extensive requirements in to ensure that the floater remains in position also during extreme events like engine room fires, etc. Nevertheless, the vessel 100 according to the invention does not need to provide any utilities, well or barrier control, for the injection system. Consequently, the vessel 100 may operate under maritime legislation and regulations, which are normally far less restrictive than the offshore legislation and regulations.

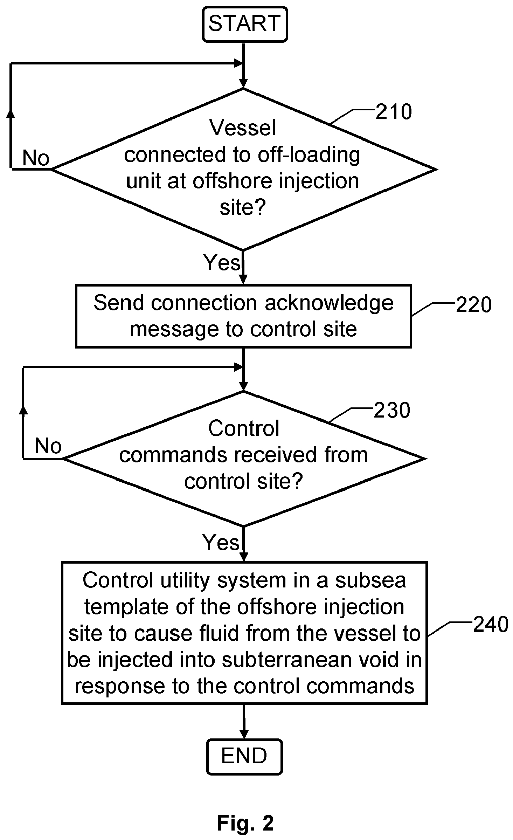

To sum up, and with reference to the flow diagram in Figure 2, we will now describe a method according to one embodiment of the invention.

In a first step 210, it is checked if a fluid-containing vessel 100 has been connected to the off-loading unit 170 of the offshore injection site 100, and if so a step 220 follows. Otherwise, the procedure loops back and stays in step 210.

In step 220, an acknowledge message C_{ack} is sent from the offshore injection site 100 to the control site 160. The acknowledge message C_{ack} confirms that the vessel 100 has been connected to the off-loading unit 170, and thus the vessel 110 is ready to start injecting the fluid into the subterranean void 150 for storage.

In a subsequent step 230, it is checked if control commands C_{cmd} from the control site 160 have been received in the offshore injection site 100, and if so a step 240 follows. Otherwise, the procedure loops back and stays in step 230.

In step 240, in response to the control commands C_{cmd}, a utility system of the subsea template 120 in the offshore injection site 100 causes the fluid from the vessel 110 to be injected into the subterranean void 150.

Preferably, another acknowledge message C_{ack} from the offshore injection site 100 signals to the control site 160 that the fluid transfer has been completed. Thereafter, the procedure ends.

Further preferably, the method involves receiving the control commands C_{cmd} from a control site 160 positioned at a location being geographically separated from the offshore injection site 100. Therefore, the subsea template 120 may further contain a communication interface 120c being communicatively connected to the control site 160, and the method involves receiving the control commands C_{cmd} in the subsea template 120 via the communication interface 120c.

Moreover, it is advantageous if, prior to controlling the utility system to cause the fluid from the vessel 110 to be injected into the subterranean void 150, the method involves injecting at least one heated chemical from the vessel 110. The at least one heated chemical is adapted to remove at least one undesired constituent, e.g. salt precipitation, from the subterranean void 150, which undesired constituent has been induced by formation water surrounding the offshore injection site 100. Additionally, or alternatively, the at least one heated chemical is adapted to reduce an amount of undesired chemical reactions between the fluid, e.g. CO₂, and said formation water. The at least one heated chemical may also be adapted to melt any CO₂ hydrates. The at least one heated chemical may contain MEG, DEG and/or TEG.

Variations to the disclosed embodiments can be understood and effected by those skilled in the art in practicing the claimed invention, from a study of the drawings, the disclosure, and the appended claims.

The term "comprises/comprising" when used in this specification is taken to specify the presence of stated features, integers, steps or components. The term does not preclude the presence or addition of one or more additional elements, features, integers, steps or components or groups thereof. The indefinite article "a" or "an" does not exclude a plurality. In the claims, the word "or" is not to be interpreted as an exclusive or (sometimes referred to as "XOR"). On the contrary, expressions such as "A or B" covers all the cases "A and not B", "B and not A" and "A and B", unless otherwise indicated. The mere fact that certain measures are recited in mutually different dependent claims does not indicate that a combination of these measures cannot be used to advantage. Any reference signs in the claims should not be construed as limiting the scope.

It is also to be noted that features from the various embodiments described herein may freely be combined, unless it is explicitly stated that such a combination would be unsuitable.

The invention is not restricted to the described embodiments in the figures, but may be varied freely within the scope of the claims.

## Claims

1. A subsea fluid handling system for long term storage of fluids, comprising:
an offshore injection site (100) configured to receive fluid from a vessel (110), the offshore injection site (100) comprising a subsea template (120) arranged on a seabed (130) at a wellhead for a drill hole (140) to a subterranean void (150), which subsea template (140) comprises a utility system configured to cause the fluid from the vessel (110) to be injected into the subterranean void (150) in response to control commands (C_{cmd}).

2. The system according to claim 1, comprising:
a control site (160) configured to generate said control commands (C_{cmd}), which control site (160) is positioned at a location geographically separated from the offshore injection site (100), wherein the subsea template (120) further comprises a communication interface (120c) communicatively connected to the control site (160), and the subsea template (120) is configured to receive said control commands (C_{cmd}) via the communication interface (120c).

3. The system according to claim 2, wherein the communication interface (120c) is configured to receive said control commands (C_{cmd}) via at least one of a submerged fiber-optic cable (165), a submerged copper cable (165), a terrestrial radio link and a satellite link.

4. The system according to any one of the claims 2 or 3, wherein the control site (160) is positioned at an onshore location.

5. The system according to any one of the claims 2 or 3, wherein the control site (160) is positioned at an offshore location geographically separated from the offshore injection site.

6. The system according to any one of the preceding claims, wherein the offshore injection site (100) comprises:
a buoy-based off-loading unit (170) configured to be connected to the vessel (110) and receive the fluid therefrom via a swivel assembly in the vessel (110).

7. The system according to claim 6, wherein the buoy-based off-loading unit (170) is connected to the subsea template via at least one injection riser (171, 172), the at least one injection riser (171, 172) being configured to forward the fluid from the buoy-based off-loading unit (170) to the subsea template (120).

8. The system according to claim 7, wherein the at least one injection riser (171, 172) comprises at least one hold-back clamp (173; 174) securing the at least one injection riser (171, 172) to the seabed (130).

9. The system according to any one of the preceding claims, wherein the subsea template (120) comprises a power input interface (120p) configured to receive electric energy (P_{E}) for operating the utility system.

10. The system according to claim 9, wherein the power input interface (120p) is configured to receive the electric energy (P_{E}) to be used in connection with operating at least one of: a well at the wellhead, a safety barrier element comprised in the subsea template (120) and a remotely operated vehicle stationed at the subsea template (120).

11. The system according to any one of the claims 9 or 10, comprising:
at least one power source (180) configured to supply the electric power (P_{E}) to the power input interface (120p), which at least one power source (180) is positioned at a location comprised in the group of: the offshore injection site (100), an offshore site at a location geographically separated from the offshore injection site (100) and an onshore site.

12. The system according to any one of the preceding claims, wherein the utility system in the subsea template (120) comprises:
a valve system configured to control the injection of the fluid into the subterranean void (150),
a hydraulic power unit configured to supply pressurized hydraulic fluid for operation of the valve system, and
at least one battery configured to store electric energy for use by the hydraulic power unit and the valve system as a backup to the electric energy (P_{E}) received directly via the power input interface (120p).

13. The system according to any one of the preceding claims, wherein the utility system in the subsea template (120) comprises:
a valve system configured to control the injection of the fluid into the subterranean void (150),
an electrical wiring system configured to operate the valve system by means of electrical control signals, and
at least one battery configured to store electric energy for use by the electrical wiring system and the valve system as a backup to the electric energy (P_{E}) received directly via the power input interface (120p).

14. The system according to any one of the preceding claims, wherein the utility system in the subsea template (120) comprises:
at least one storage tank holding at least one assisting liquid configured to facilitate at least one function associated with injecting the fluid into the subterranean void (150), the at least one assisting liquid comprising at least one of a de-hydrating liquid and an anti-freezing liquid.

15. The system according to any one of the preceding claims, wherein the fluid comprises carbon dioxide.

16. The system according to any one of the preceding claims, wherein the subterranean void (150) is one of a subterranean aquifer, a depleted gas reservoir and a depleted oil reservoir.

17. The system according to any one of the preceding claims, wherein the offshore injection site (100) is configured to receive the fluid in a liquid phase.

18. A method for long term storage of fluid in a subterranean void (150), the method comprising:
connecting a vessel (110) to an offshore injection site (100), which vessel (110) contains a fluid to be stored in the subterranean void (150) and which offshore injection site (100) comprises: a subsea template (120) arranged on a seabed (130) at a wellhead for a drill hole (140) to the subterranean void (150), and a utility system,
receiving control commands (C_{cmd}) in the subsea template (120), and
controlling the utility system to cause the fluid in the vessel (110) to be injected into the subterranean void (150) in response to said control commands (C_{cmd}).

19. The method according claim 18, wherein said control commands (C_{cmd}) are received from a control site (160) positioned at a location being geographically separated from the offshore injection site (100), wherein the subsea template (120) further comprises a communication interface (120c) communicatively connected to the control site (160), and the method comprises:
receiving said control commands (C_{cmd}) in the subsea template (120) via the communication interface (120c).

20. The method according to any one of the claims 18 or 19, wherein, prior to controlling the utility system to cause the fluid from the vessel (110) to be injected into the subterranean void (150), the method comprises:
injecting at least one heated chemical from the vessel (110), which at least one heated chemical is adapted to remove at least one undesired constituent from the subterranean void (150) and/or reduce an amount of undesired chemical reactions between the fluid and formation water surrounding the offshore injection site (100).
